# EUROPEAN PATENT SPECIFICATION

(11) **EP 3 706 051 B1**
(45) Date of publication and mention of the grant of the patent: **25.06.2025**
(21) Application number: 18873817.3
(22) Date of filing: 24.04.2018
(51) Int. Cl.: G06Q 10/06

(54) **BATTERY EQUALIZATION METHOD AND SYSTEM**
BATTERIEEGALISIERUNGSVERFAHREN UND -SYSTEM
PROCÉDÉ ET SYSTÈME D'ÉGALISATION DE BATTERIES

(30) Priority: 03.11.2017 CN 201711071230
(43) Date of publication of application: 09.09.2020
(73) Proprietor: NIO (Anhui) Holding Co., Ltd., Hefei City, Anhui Province (CN)
(72) Inventor: LAI, Jianwen, Jiading, Shanghai (CN); MA, Xiang, Jiading, Shanghai (CN); WU, Yingying, Jiading, Shanghai (CN); LU, Ronghua, Jiading, Shanghai (CN)
(74) Representative: Vossius & Partner Patentanwälte Rechtsanwälte mbB
(86) International application number: PCT/CN2018/084142
(87) International publication number: WO 2019/085411

(56) References cited:
- CN-A- 103 326 074
- CN-A- 105 846 483
- CN-A- 105 911 471
- CN-A- 106 183 857
- CN-A- 106 183 857
- CN-A- 106 208 194
- ANONYMOUS: "Charging station - Wikipedia", 5 November 2017 (2017-11-05), XP055825391, Retrieved from the Internet <URL:https://en.wikipedia.org/w/index.php?title=Charging_station&oldid=803967958> [retrieved on 20210719]

## Description

### Field of the Invention

The present invention relates to a method and system for balancing batteries, in particular to a method and system for balancing batteries of an electric vehicle.

### Background of the Invention

With the development of electric vehicles, a variety of energy replenishment means have also appeared for the power batteries of battery vehicles. At present, commonly used means include charging by using household AC charging piles (commonly known as: slow charging), charging by using public or dedicated DC charging piles (commonly known as: fast charging) and fast battery replacement (commonly known as: battery replacement). A battery replacement station is generally equipped with a fast charging facility or a slow charging facility to charge a power-lost battery.

Under different energy replenishment measures such as fast charging, slow charging, battery replacement or the like, and different user habits, the attenuation degrees of the power batteries of the electric vehicle is seriously inconsistent, and some batteries are prematurely attenuated due to unhealthy use, thus affecting the service lives of the batteries.

If slow charging is applied to the batteries in the battery replacement station all the time, the turnover efficiency of the batteries is greatly reduced, and the number of standby batteries needs to be increased; and if the slow charging is used all the time, a serious decline in the number of battery cycles is caused, which seriously shortens the service lives of the batteries.

In addition, the inconsistency of the service lives of the batteries mentioned above will lead to serious imbalance in the states of batteries put into use in the same batch. In the battery replacement station, for two batteries with a large difference in the state of health (State of Health, abbreviated as SOH), after being fully charged, even if the state of charge (State of Charge, abbreviated as SOC) is the same value, but the actual mileages that can be driven under the same driving conditions are very different, which causes trouble to the use of the vehicle of a user and seriously affects the user experience. The document CN 106183857 A discloses a prior art battery balancing method for a battery in an electric vehicle.

### Summary of the Invention

The purpose of the present invention is to overcome the shortcomings of the existing battery energy replenishment method and provide a battery balancing method. The technical problem to be solved is to equalize the states of health of multiple batteries in a battery bank through balanced and reasonable energy replenishment means.

The purpose of the present invention and the technical problems to be solved are achieved by the following technical solutions. The battery balancing method proposed according to the present invention is defined in claim 1.

The purpose of the present invention and the technical problems to be solved can also be further achieved by the technical measures recited in claims 2-7.

The purpose of the present invention and the technical problems to be solved can also be further achieved by the following technical solutions. A battery balancing system proposed according to the present invention is defined in claim 7.

The purpose of the present invention and the technical problems to be solved can also be further achieved by the technical measures defined in claims 8-13.

The purpose of the present invention and the technical problems to be solved can also be achieved by the following technical solutions. A controller proposed according to the present invention includes a memory and a processor, the memory stores a computer program, and the program can implement the steps of any foregoing battery balancing method when executed by the processor.

The purpose of the present invention and the technical problems to be solved can also be achieved by the following technical solutions. A computer-readable storage medium proposed according to the present invention is used for storing computer instructions, and the instructions implement the steps of any foregoing battery balancing method when executed by a computer or a processor.

By means of the above technical solutions, the present invention at least has the following advantages and beneficial effects of:
(1) ensuring that the power batteries put into use in the same batch can be decommissioned in the same period, so that they can be used in a stepped manner or withdrawn from the circulation field in the same period;
(2) ensuring that each battery is used healthily, and reducing the continuous unhealthy use of a certain battery; and
(3) by balancing the state of health of the battery, bringing better driving experience to the vehicle owner of the electric vehicle with a replaceable battery.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig. 1 is a schematic flow diagram of a battery balancing method in one embodiment of the present invention.
Fig. 2 is a schematic flow diagram of a battery balancing method in another embodiment of the present invention.
Fig. 3 is a schematic flow diagram of a battery balancing method in yet another embodiment of the present invention.
Fig. 4 is a structure block diagram of a battery balancing system in one embodiment of the present invention.
Fig. 5 is a structure block diagram of a battery balancing system in another embodiment of the present invention.

### Detailed Description of the Embodiments

In order to further illustrate the technical means and effects adopted in the present invention to achieve the intended purpose of the invention, specific embodiments, structures, features and effects of a battery balancing method proposed in accordance with the present invention are described in detail below, in conjunction with the drawings and preferred embodiments.

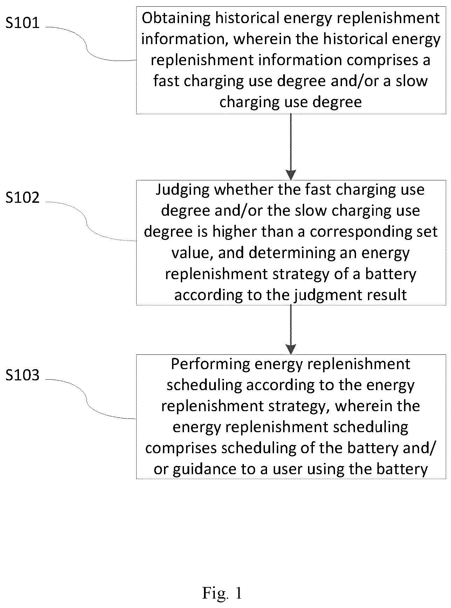

Please refer to Fig. 1, a battery balancing method proposed by the embodiment of the present invention includes the following steps.

Step S101: historical energy replenishment information is obtained, the historical energy replenishment information includes use degree information, such as a fast charging use degree, and a slow charging use degree. The energy replenishment includes fast charging, slow charging and battery replacement.

The historical energy replenishment information can be historical energy replenishment information about the battery, such as recording of the health degree of the battery, the past energy replenishment time of the battery, the energy replenishment mode, voltage, current and other information, can also be historical energy replenishment information about a battery user (or vehicle owner), in fact, the historical energy replenishment information about the user is equivalent to the energy replenishment habit information of the user, for example, whether the user has a slow charging device dedicated to the user such as a household slow charging pile, and historical information, such as the times, proportion, frequency or the like of the user using various energy replenishment modes or energy replenishment facilities (for example, the dedicated slow charging device, a slow charging device, a fast charging device, a battery replacement device or the like).

The use degree information refers to information that can represent the impact of energy replenishment or use on the service life of the battery, and the use degree information also includes a battery use degree and a user use degree. For example, the fast charging use degree or the slow charging use degree includes the use degree of a battery using fast charging/slow charging and the use degree of the user using the fast charging device/the slow charging device.

The use degree information can be from the start to present and can also be within a preset time period, for example, various battery use degrees can be the impact of the energy replenishment or use on the service life of the battery within the entire battery life period starting from the use, and can also be the impact of the energy replenishment or use within a short period (for example, several times of recent energy replenishment) on the service life of the battery, and various user use degrees can be recorded all the past energy replenishment habits of the user and can also be the energy replenishment habits in recent times.

In addition, the historical energy replenishment information can be recorded in the cloud in advance, and can be obtained from the cloud when needed. The use degree information can also be queried by reading a vehicle battery ID or reading a user ID through the Internet of Vehicles.

Step S102: whether an actual value of the obtained fast charging use degree is higher than a preset target value of the fast charging use degree is judged, and/or, whether the actual value of the obtained slow charging use degree is higher than a preset target value of the slow charging use degree is judged, and an energy replenishment strategy of the battery is determined according to the judgment result.

The determining an energy replenishment strategy at least includes: determining an energy replenishment mode to be adopted as fast charging, slow charging or battery replacement. In addition, it can include determining other information, for example, determining the specific voltage and current of charging, determining which battery should be replaced, determining to use which one of the same kind of energy replenishment devices in a battery replacement station, or determining which one of multiple battery replacement stations should be selected.

The target value of the fast charging use degree and the target value of the slow charging use degree are thresholds of performing a reasonable charging mode. When the slow charging use degree is higher than the target value of the slow charging use degree or the fast charging use degree is lower than the target value of the fast charging use degree, the energy replenishment mode to be adopted by the battery can be determined as a fast charging mode, and when the fast charging use degree is higher than the target value of the fast charging use degree or the slow charging use degree is lower than the target value of the slow charging use degree, the energy replenishment mode to be adopted by the battery can be determined as a slow charging mode, so as to perform energy replenishment on the battery according to the reasonable charging mode, and the states of health of multiple batteries (such as the same batch of batteries) can be balanced to be basically consistent. It should be noted that the specific value of the target value of the use degree can be set in advance, or the specific value of the target value of the use degree can be obtained in a battery balancing process.

The energy replenishment strategy is determined based on judging whether the battery use degree reaches the target value. Specifically, the energy replenishment can be performed according to a certain ratio of fast charging and slow charging in various ways.

In a specific mode, the fast charging use degree includes a battery fast charging ratio for representing a proportion of the fast charging times of the battery to the total charging times of the battery starting from the use of the battery or within a preset time period. The process of the step S102 specifically includes: judging whether the actual value of the fast charging ratio of the battery on which the energy replenishment is about to perform reaches or exceeds a preset target value of the fast charging ratio, if the judgment result is yes, determining the present energy replenishment mode as slow charging, or otherwise, determining the present energy replenishment mode as fast charging.

In a specific mode, the slow charging use degree includes a battery slow charging ratio for representing a proportion of the slow charging times of the battery to the total charging times of the slow starting from the use of the battery or within a preset time period. The process of the step S102 specifically includes: judging whether the actual value of the slow charging ratio of the battery on which the energy replenishment is about to perform reaches or exceeds a preset target value of the slow charging ratio, if the judgment result is yes, determining the present energy replenishment mode as fast charging, or otherwise, determining the present energy replenishment mode as slow charging.

In a specific mode, the fast charging use degree includes the fast charging times of the battery within a charging mode cycle period, and the charging mode cycle period refers to a period composed of successive multiple charging operations of the battery. The process of the step S102 specifically includes: judging whether the fast charging times of the battery within the recent charging mode cycle period reach or exceed a preset target value of the fast charging times, if the judgment result is yes, performing energy replenishment on the battery in the slow charging mode, or otherwise, performing the energy replenishment on the battery in the fast charging mode. In one example, one charging mode cycle period is set as the duration of five times of charging (including fast charging and slow charging) of the battery, and the corresponding target value of the fast charging times is set as 1; and the fast charging times of the battery within the previous four times of charging are obtained, whether the fast charging times reach or exceed once is judged, if yes, the present energy replenishment mode is determined as slow charging, or otherwise, the present energy replenishment mode is determined as fast charging.

In a specific mode, the slow charging use degree includes the slow charging times of the battery within a charging mode cycle period, and the charging mode cycle period refers to a period composed of successive multiple charging operations of the battery. The process of the step S102 specifically includes: judging whether the slow charging times of the battery within the recent charging mode cycle period reach or exceed a preset target value of the slow charging times, if the judgment result is yes, performing energy replenishment on the battery in the fast charging mode, or otherwise, performing the energy replenishment on the battery in the slow charging mode.

In yet another specific mode, the use degree information includes historical information of the charging times and the charging mode of the battery, and the target value of the use degree includes a set fast charging interval period, which can be four times, for example. The process of the step S102 specifically includes: querying the data of the previous four times in the charging history information of the battery, if the fast charging times are not less than one, then scheduling to use the slow charging service, or scheduling to use the battery replacement service and performing slow charging energy replenishment on the replaced battery; and if the fast charging times are zero, then scheduling to use the fast charging service, or scheduling to use the battery replacement service and performing fast charging energy replenishment on the replaced battery.

The principle of formulating the energy replenishment strategy according to a certain ratio of fast charging and slow charging is that the current power battery is not expected to be continuously charged quickly, for example, most batteries are best to be charged in a charging mode in which the ratio of fast charging to slow charging is 1: 4 (once fast charging, 4 times of slow charging), which has little impact on the service life of the battery. Therefore, a periodic fast and slow interval energy replenishment strategy can be implemented. For example, 5 times are used as a fast and slow interval period, within a fast and slow interval period, 4 times of slow charging and once fast charging are used to perform the slow charging and fast charging ratio, and the charging mode can be set as "slow, slow, slow, slow, fast, slow, slow, slow, slow, fast, slow, slow, slow, slow ...".

When the historical energy replenishment information obtained in the step S101 of the present method includes energy replenishment habit information of the user, and the fast charging use degree includes a degree of the user using a fast charging device, or the slow charging use degree includes a degree of the user using a slow charging device, the process of the step S102 of the present method can include: judging whether the actual value of the degree of the user using the slow charging device/the degree of the user using the fast charging device of the battery reaches a preset target value, and determining the energy replenishment strategy of the battery according to the judgment result. In one example, the step S102 includes: judging whether the actual value of the ratio of the user using a dedicated slow charging device of the battery exceeds a preset target value of the ratio of the user using the dedicated slow charging device, and whether the battery is not replaced within a preset battery replacement period, and if the judgment result is yes, determining the energy replenishment mode to be adopted as battery replacement. The ratio of the user using the dedicated slow charging device is used for representing the proportion of the times of the user using the dedicated slow charging device such as a household slow charging pile to perform energy replenishment to the total energy replenishment times of the user, starting from the initial energy replenishment of the user (the initial energy replenishment is initial energy replenishment relative to all batteries used by the user) or within a preset time period. It should be noted that the user use degree is not limited to be determined by the ratio manner, but can also be determined by a variety of manners such as the cycle period manner.

Further, the energy replenishment strategy can be determined by setting multiple target values of the same kind of use degree or by synthesizing multiple use degrees. For example, the battery use degree and the user use degree can be judged at the same time; the energy replenishment strategy can also be determined by using multiple fast charging use degrees (for example, through the ratio manner and the cycle period manner at the same time); and the fast charging use degree and the slow charging use degree can also be judged at the same time, for example, in one example, the preset target value of the fast charging times and the preset target value of the slow charging times can be considered in a charging mode cycle period at the same time, if the actual value of the fast charging times reaches the target value of the fast charging times, slow charging is performed, if the actual value of the slow charging times reaches the target value of the slow charging times, fast charging is performed, otherwise, energy replenishment is performed according to the selection of the user, therefore the fast charging and slow charging of the battery can be limited at the same time to better achieve battery balance.

In addition, it should be noted that, in order to prevent the situation that a new battery is always scheduled to perform battery replacement and fast charging at the beginning of use according to the steps of the foregoing method (in fact, because there is no enough historical energy replenishment information), the several times of energy replenishment mode of the new battery at the beginning can be preset to be fixed, for example, the previous five times of energy replenishment mode of the new battery (or a battery with insufficient historical energy replenishment information) are fixed as slow, slow, slow, slow and fast, or, the energy replenishment strategy can be determined according to the step S102 after the battery is charged for certain times.

Step S103: energy replenishment scheduling is performed according to the determined energy replenishment strategy. The energy replenishment scheduling can include scheduling of the battery, and can also include guidance to the user using the battery.

The above scheduling can be specifically implemented in a variety of ways, including:
Battery replacement station scheduling, in the same battery replacement station, based on the energy replenishment strategy obtained by analyzing the state of health and the use condition of each battery in a batch of batteries, different charging modes are implemented on the batteries, or, flexible charging is performed on the batteries; or, among multiple battery replacement stations, based on the obtained energy replenishment strategy, and based on the obtained conditions and number of various energy replenishment devices configured in the battery replacement stations and/or the conditions and number of idle devices in various energy replenishment devices (for example, some battery replacement stations mainly perform fast charging, and some battery replacement stations mainly perform slow charging), the battery is scheduled or the user is guided to the battery replacement station using the charging mode corresponding to the state of health and the use condition of the battery or the battery replacement station corresponding to the largest number of idle devices of the corresponding type;
cloud scheduling, personal or group historical energy replenishment information is collected from a cloud database, and the battery is scheduled to adopt the suitable energy replenishment strategy through the data analysis of the cloud; and
user-guided scheduling, the user is encouraged and guided to adopt an appropriate energy replenishment mode to schedule more batteries to enter the replaceable field or maintain more batteries to remain in the replaceable field. For example, the user guidance can be conducted through user operation means such as issuing battery replacement coupons, and providing free battery replacement services or free vehicle maintenance.

By performing scheduling-based battery balancing on the batteries in a battery bank, the batteries in the battery bank can have a substantially consistent state of health. Further, by performing the scheduling-based battery balancing on the batteries put into use in the same batch in the battery bank, the batteries put into use in the same batch in the battery bank can have a substantially consistent state of health. It should be noted that the battery bank mentioned here can include batteries within a smaller range, for example, batteries within the range of one or more battery replacement stations, or batteries within a larger range, for example, batteries of all users in the entire cloud database, and by guiding the user, the range of the battery bank can be increased.

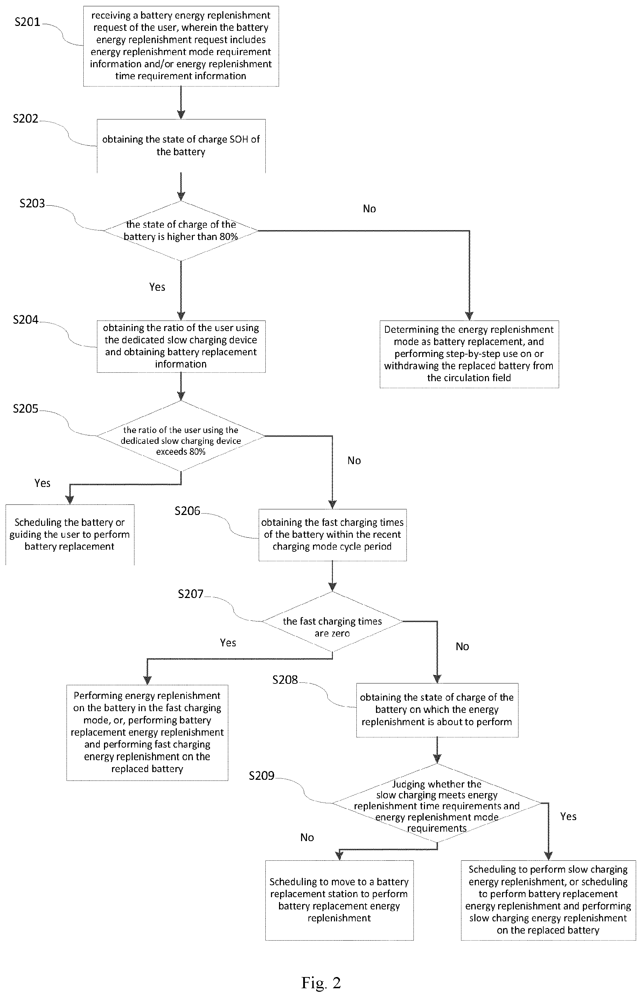

Please refer to Fig. 2, a battery balancing method according to the embodiment of the present invention includes the following steps.

Step S201: a battery energy replenishment request of the user (vehicle owner) is received. Optionally, the battery energy replenishment request can include energy replenishment mode requirement information and/or energy replenishment time requirement information. For example, the battery energy replenishment request can specifically include whether to select time-limited service or reservation service.

Step S202: the state of health SOH of the battery is obtained.

The state of health SOH of the battery is a commonly used indicator to characterize the service life of the battery. The state of health SOH of the battery can be calculated according to known means. The state of health SOH of the battery can be pre-calculated and uploaded and stored in the Internet of Vehicles, when the state of health SOH of the battery needs to be called, the state of health SOH of the battery is obtained by reading the battery ID from the Internet of Vehicles.

Step S203: whether the state of health of the battery on which the energy replenishment is about to perform is lower than or equal to a decommissioning set value of the power battery, if the judgment result is yes, the energy replenishment mode to be adopted by the battery is determined as battery replacement, and the replaced battery is used step by step or withdrawn from circulation.

The decommissioning set value of the power battery is a threshold value used for judging whether the battery should be decommissioned to enter step-by-step use or withdraw from the circulation field of the power battery. The specific value of the decommissioning set value of the power battery can be preset, and the specific value of the decommissioning set value of the power battery can also be obtained in the battery balancing process. Generally, the decommissioning set value of the power battery can be 80%.

Step S204: the ratio of the user using the dedicated slow charging device in the energy replenishment habit information of the user in the historical energy replenishment information is obtained, and the battery replacement information in the historical energy replenishment information is obtained. The dedicated slow charging device includes a household slow charging pile dedicated to the user.

Step S205: whether the actual value of the ratio of the user using the dedicated slow charging device exceeds a preset target value of the ratio of the user using the dedicated slow charging device, and whether the battery is not replaced within a preset battery replacement period are judged, and if the judgment result is yes, the battery is scheduled or the user is guided to perform energy replenishment in the battery replacement mode. Therefore, through the battery replacement means, the battery undergoing excessive healthy use of the user flows into the energy replenishment scheduling range of the battery bank from the user, and the controllable range of energy replenishment scheduling is expanded.

In one example, the target value of the ratio of the user using the dedicated slow charging device is preset as 80%, the battery replacement period is preset as three months, and when it is judged that the actual value of the ratio of the user using the dedicated slow charging device reaches or exceeds 80 % and that the user does not perform battery replacement within three months, the user is guided to perform battery replacement on the battery being used at present.

Step S206: the fast charging times of the battery within the recent charging mode cycle period in the historical energy replenishment information are obtained. Here, the length of one charging mode cycle period is set as five times in advance, and the target value of the fast charging times is set as once.

Step S207: whether the obtained fast charging times of the battery within the recent charging mode cycle period reach a preset target value of the fast charging times, if the actual value of the fast charging times is 1, energy replenishment is performed on the battery in the slow charging mode, or, battery replacement energy replenishment is performed, and slow charging energy replenishment is performed on the replaced battery, and if the actual value of the fast charging times is zero, energy replenishment is performed on the battery in the fast charging mode, or fast charging energy replenishment is performed on the replaced battery.

Step S208: the state of charge (State of Charge, abbreviated as SOC) of the battery on which the energy replenishment is about to perform is obtained. The state of charge SOC of the battery is used for indicating the dump energy of the battery.

Step S209: according to the battery energy replenishment request and the state of charge of the battery, if it is judged that energy replenishment is performed according to the charging mode determined in the previous step, and that the requirements of the energy replenishment time and energy replenishment mode in the battery energy replenishment request cannot be satisfied, the battery is scheduled or the user is guided to perform energy replenishment in the battery replacement mode, and the energy replenishment is performed on the replaced battery according to the charging mode determined in the previous step; and if the requirements of the energy replenishment time and energy replenishment mode can be satisfied, the energy replenishment is performed according to the originally determined charging mode. It should be noted that, in fact, an estimated charging time can be obtained by using the state of charge and the charging current and voltage to be adopted.

In one example, the battery energy replenishment request can select to perform the time-limited service or the reservation service, after it is judged that the slow charging energy replenishment should be performed on the battery on which the energy replenishment is about to perform, whether the time-limited service or the reservation service is selected in the battery energy replenishment request initiated by the user is judged, if the time-limited service is selected, then the battery is scheduled to move to the battery replacement station to use the battery replacement service, and if the reservation service is selected, then the battery is scheduled to use the slow charging service, or, the battery is scheduled to use the battery replacement service, and the slow charging energy replenishment is performed on the replaced battery.

After the energy replenishment strategy is determined, energy replenishment scheduling is performed according to the energy replenishment strategy.

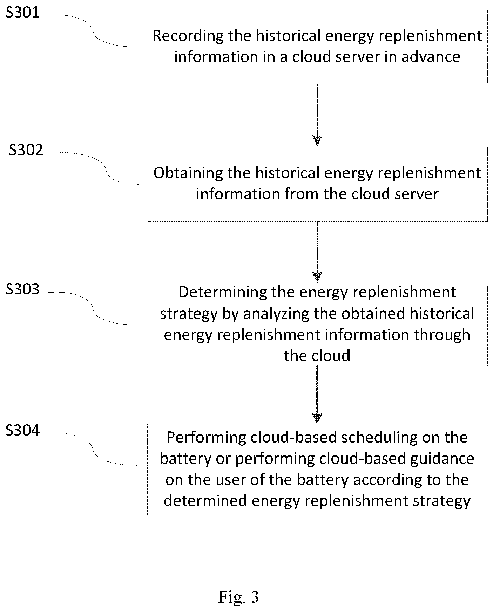

The battery balancing method of the present invention can be implemented through a cloud server, cloud analysis, and/or cloud scheduling. Please refer to Fig. 3, in some embodiments, the battery balancing method of the present invention includes the following steps:
Step S301: the historical energy replenishment information is recorded in the cloud server in advance. Each power battery can be monitored for the entire life cycle from the first time it is put into use, the battery information can be recorded in the Internet of Vehicles or the cloud server, and the battery information can include: the state of health of the battery, the charging times, every charging mode (specifically can be charging current and voltage, or AC or DC, or fast charging or slow charging can be directly recorded), the state of charge or the dump energy or the like. Similarly, the energy replenishment habit information of the vehicle user can also be stored in the Internet of Vehicles or the cloud server.
Step S302: the historical energy replenishment information is obtained from the cloud server.
Step S303: the obtained historical energy replenishment information is analyzed through the cloud to determine the energy replenishment strategy.
Step S304: cloud-based scheduling is performed on the battery or cloud-based guidance is performed on the user of the battery according to the determined energy replenishment strategy.

Optionally, the batteries put into use in the same batch (or at the same time) can be actively counted according to the method of the foregoing embodiment periodically (for example, a period of three months), among users who do not periodically perform battery replacement, the users who often use household charging piles or users who frequently use fast charging piles are guided, suggested or scheduled to guide them to perform battery replacement, so as to ensure that the same batch of batteries can be used in a balanced manner, the overall efficiency is improved, and the service life is prolonged. In some embodiments, the battery balancing method of the present invention includes: for batteries put into use in the same batch, periodically obtaining the historical energy replenishment information, periodically determining the energy replenishment strategy, and periodically guiding the user of the battery according to the energy replenishment strategy.

The above-mentioned guidance can be conducted through user operation means such as issuing battery replacement coupons, and providing free battery replacement services or free vehicle maintenance, etc.

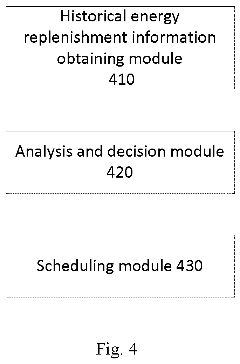

Please refer to Fig. 4, the embodiment of the present invention further provides a battery balancing system, including the following modules.

A historical energy replenishment information obtaining module 410 is configured to obtain historical energy replenishment information. The historical energy replenishment information includes use degree information, such as a fast charging use degree, and a slow charging use degree. The energy replenishment includes fast charging, slow charging and battery replacement.

The historical energy replenishment information can be historical energy replenishment information about the battery, such as recording of the health degree of the battery, the past energy replenishment time of the battery, the energy replenishment mode, voltage, current and other information, can also be historical energy replenishment information about a battery user (or vehicle owner), in fact, the historical energy replenishment information about the user is equivalent to the energy replenishment habit information of the user, for example, whether the user has a slow charging device dedicated to the user such as a household slow charging pile, and historical information, such as the times, proportion, frequency or the like of the user using various energy replenishment modes or energy replenishment facilities (for example, the dedicated slow charging device, a slow charging device, a fast charging device, a battery replacement device or the like).

The use degree information refers to information that can represent the impact of energy replenishment or use on the service life of the battery, and the use degree information also includes a battery use degree and a user use degree. For example, the fast charging use degree or the slow charging use degree includes the use degree of a battery using fast charging/slow charging and the use degree of the user using the fast charging device/the slow charging device.

The use degree information can be from the start to present and can also be within a preset time period, for example, various battery use degrees can be the impact of the energy replenishment or use on the service life of the battery within the entire battery life period starting from the use, and can also be the impact of the energy replenishment or use within a short period (for example, several times of recent energy replenishment) on the service life of the battery, and various user use degrees can be recorded all the past energy replenishment habits of the user and can also be the energy replenishment habits in recent times.

In addition, the historical energy replenishment information can be recorded in the cloud in advance, and can be obtained from the cloud when needed. The use degree information can also be queried by reading a vehicle battery ID or reading a user ID through the Internet of Vehicles.

An analysis and decision module 420 is configured to judge whether an actual value of the obtained fast charging use degree is higher than a preset target value of the fast charging use degree, and/or, judge whether the actual value of the obtained slow charging use degree is higher than a preset target value of the slow charging use degree, and determine an energy replenishment strategy of the battery according to the judgment result. The determining an energy replenishment strategy at least includes: determining an energy replenishment mode to be adopted as fast charging, slow charging or battery replacement. In addition, it can include determining other information, for example, determining the specific voltage and current of charging, determining which battery should be replaced, determining to use which one of the same kind of energy replenishment devices in a battery replacement station, or determining which one of multiple battery replacement stations should be selected.

The target value of the fast charging use degree and the target value of the slow charging use degree are thresholds of performing a reasonable charging mode. When the slow charging use degree is higher than the target value of the slow charging use degree or the fast charging use degree is lower than the target value of the fast charging use degree, the energy replenishment mode to be adopted by the battery can be determined as a fast charging mode, and when the fast charging use degree is higher than the target value of the fast charging use degree or the slow charging use degree is lower than the target value of the slow charging use degree, the energy replenishment mode to be adopted by the battery can be determined as a slow charging mode, so as to perform energy replenishment on the battery according to the reasonable charging mode, and the states of health of multiple batteries (such as the same batch of batteries) can be balanced to be basically consistent. It should be noted that the specific value of the target value of the use degree can be set in advance, or the specific value of the target value of the use degree can be obtained in a battery balancing process.

The energy replenishment strategy is determined based on judging whether the battery use degree reaches the target value. Specifically, the energy replenishment can be performed according to a certain ratio of fast charging and slow charging in various ways.

In a specific mode, the fast charging use degree includes a battery fast charging ratio for representing a proportion of the fast charging times of the battery to the total charging times of the battery starting from the use of the battery or within a preset time period. The analysis and decision module 420 includes a first decision sub-module, configured to judge whether the actual value of the fast charging ratio of the battery on which the energy replenishment is about to perform reaches or exceeds a preset target value of the fast charging ratio, if the judgment result is yes, determine the present energy replenishment mode as slow charging, or otherwise, determine the present energy replenishment mode as fast charging.

In a specific mode, the slow charging use degree includes a battery slow charging ratio for representing a proportion of the slow charging times of the battery to the total charging times of the slow starting from the use of the battery or within a preset time period. The analysis and decision module 420 includes a second decision sub-module, configured to judge whether the actual value of the slow charging ratio of the battery on which the energy replenishment is about to perform reaches or exceeds a preset target value of the slow charging ratio, if the judgment result is yes, determine the present energy replenishment mode as fast charging, or otherwise, determine the present energy replenishment mode as slow charging.

In a specific mode, the fast charging use degree includes the fast charging times of the battery within a charging mode cycle period, the charging mode cycle period refers to a period composed of successive multiple charging operations of the battery, and the specific value of the charging mode cycle period can be preset. The analysis and decision module 420 includes a third decision sub-module, configured to judge whether the fast charging times of the battery within the recent charging mode cycle period reach or exceed a preset target value of the fast charging times, if the judgment result is yes, perform energy replenishment on the battery in the slow charging mode, or otherwise, perform the energy replenishment on the battery in the fast charging mode. In one example, one charging mode cycle period is set as the duration of five times of charging (including fast charging and slow charging) of the battery, and the corresponding target value of the fast charging times is set as 1; and the fast charging times of the battery within the previous four times of charging are obtained, whether the fast charging times reach or exceed once is judged, if yes, the present energy replenishment mode is determined as slow charging, or otherwise, the present energy replenishment mode is determined as fast charging.

In a specific mode, the slow charging use degree includes the slow charging times of the battery within a charging mode cycle period, the charging mode cycle period refers to a period composed of successive multiple charging operations of the battery, and the specific value of the charging mode cycle period can be preset. The analysis and decision module 420 includes a fourth decision sub-module, configured to judge whether the slow charging times of the battery within the recent charging mode cycle period reach or exceed a preset target value of the slow charging times, if the judgment result is yes, perform energy replenishment on the battery in the fast charging mode, or otherwise, perform the energy replenishment on the battery in the slow charging mode.

In yet another specific mode, the use degree information includes historical information of the charging times and the charging mode of the battery, and the target value of the use degree includes a set fast charging interval period, which can be four times, for example. The analysis and decision module 420 includes a sub-module, configured to query the data of the previous four times in the charging history information of the battery, if the fast charging times are not less than one, then schedule to use the slow charging service, or schedule to use the battery replacement service and perform slow charging energy replenishment on the replaced battery; and if the fast charging times are zero, then schedule to use the fast charging service, or schedule to use the battery replacement service and perform fast charging energy replenishment on the replaced battery.

The principle of formulating the energy replenishment strategy according to a certain ratio of fast charging and slow charging is that the current power battery is not expected to be continuously charged quickly, for example, most batteries are best to be charged in a charging mode in which the ratio of fast charging to slow charging is 1: 4 (once fast charging, 4 times of slow charging), which has little impact on the service life of the battery. Therefore, a periodic fast and slow interval energy replenishment strategy can be implemented. For example, 5 times are used as a fast and slow interval period, within a fast and slow interval period, 4 times of slow charging and once fast charging are used to perform the slow charging and fast charging ratio, and the charging mode can be set as "slow, slow, slow, slow, fast, slow, slow, slow, slow, fast, slow, slow, slow, slow ...".

When the historical energy replenishment information obtained by the historical energy replenishment information obtaining module 410 includes energy replenishment habit information of the user, and the fast charging use degree includes a degree of the user using a fast charging device, or the slow charging use degree includes a degree of the user using a slow charging device, the analysis and decision module 420 includes a sub-module, configured to judge whether the actual value of the degree of the user using the slow charging device/the degree of the user using the fast charging device of the battery reaches a preset target value, and determine the energy replenishment strategy of the battery according to the judgment result. In one example, the analysis and decision module 420 includes a fifth decision sub-module 425, configured to judge whether the actual value of the ratio of the user using a dedicated slow charging device of the battery exceeds a preset target value of the ratio of the user using the dedicated slow charging device, and whether the battery is not replaced within a preset battery replacement period, and if the judgment result is yes, determine the energy replenishment mode to be adopted as battery replacement. The ratio of the user using the dedicated slow charging device is used for representing the proportion of the times of the user using the dedicated slow charging device such as a household slow charging pile to perform energy replenishment to the total energy replenishment times of the user, starting from the initial energy replenishment of the user (the initial energy replenishment is initial energy replenishment relative to all batteries used by the user) or within a preset time period. It should be noted that the user use degree is not limited to be determined by the ratio manner, but can also be determined by a variety of manners such as the cycle period manner.

Further, various sub-modules of the analysis and decision module 420 can be used for setting multiple target values of the same kind of use degree, or, the analysis and decision module 420 can have multiple different kinds of sub-modules at the same time to synthesize multiple use degrees to determine the energy replenishment strategy. For example, the analysis and decision module 420 can include a sub-module for judging the battery use degree and a sub-module for judging the user use degree at the same time; the energy replenishment strategy can also be determined by using multiple sub-modules for judging different fast charging use degrees (or different slow charging use degree modules); and the analysis and decision module can also include a sub-module for judging the fast charging use degree and the slow charging use degree at the same time, for example, in one example, the analysis and decision module 420 can include a sub-module, configured to consider the preset target value of the fast charging times and the preset target value of the slow charging times in a charging mode cycle period at the same time, if the actual value of the fast charging times reaches the target value of the fast charging times, perform slow charging, if the actual value of the slow charging times reaches the target value of the slow charging times, perform fast charging, otherwise, perform energy replenishment according to the selection of the user, therefore the fast charging and slow charging of the battery can be limited at the same time to better achieve battery balance.

In addition, it should be noted that, in order to prevent the situation that a new battery is always scheduled to perform battery replacement and fast charging at the beginning of use according to the steps of the foregoing method (in fact, because there is no enough historical energy replenishment information), the several times of energy replenishment mode of the new battery at the beginning can be preset to be fixed, for example, the previous five times of energy replenishment mode of the new battery (or a battery with insufficient historical energy replenishment information) are fixed as slow, slow, slow, slow and fast, or, the energy replenishment strategy can be determined by the analysis and decision module 420 after the battery is charged for certain times.

A scheduling module 430 is configured to perform energy replenishment scheduling according to the energy replenishment strategy. The energy replenishment scheduling can include scheduling of the battery, and can also include guidance to the user using the battery.

The scheduling performed by the scheduling module 430 can be specifically implemented in a variety of ways, including:
Battery replacement station scheduling, in the same battery replacement station, based on the energy replenishment strategy obtained by analyzing the state of health and the use condition of each battery in a batch of batteries, different charging modes are implemented on the batteries, or, flexible charging is performed on the batteries; or, among multiple battery replacement stations, based on the obtained energy replenishment strategy, and based on the obtained conditions and number of various energy replenishment devices configured in the battery replacement stations obtained by a battery replacement station information obtaining module and/or the conditions and number of idle devices in various energy replenishment devices (for example, some battery replacement stations mainly perform fast charging, and some battery replacement stations mainly perform slow charging), the battery is scheduled or the user is guided to the battery replacement station using the charging mode corresponding to the state of health and the use condition of the battery or the battery replacement station corresponding to the largest number of idle devices of the corresponding type;
cloud scheduling, personal or group historical energy replenishment information is collected from a cloud database, and the battery is scheduled to adopt the suitable energy replenishment strategy through the data analysis of the cloud; and
user-guided scheduling, the user is encouraged and guided to adopt an appropriate energy replenishment mode to schedule more batteries to enter the replaceable field or maintain more batteries to remain in the replaceable field. For example, the user guidance can be conducted through user operation means such as issuing battery replacement coupons, and providing free battery replacement services or free vehicle maintenance.

By performing scheduling-based battery balancing on the batteries in a battery bank, the batteries in the battery bank can have a substantially consistent state of health. Further, by performing the scheduling-based battery balancing on the batteries put into use in the same batch in the battery bank, the batteries put into use in the same batch in the battery bank can have a substantially consistent state of health. It should be noted that the battery bank mentioned here can include batteries within a smaller range, for example, batteries within the range of one or more battery replacement stations, or batteries within a larger range, for example, batteries of all users in the entire cloud database, and by guiding the user, the range of the battery bank can be increased.

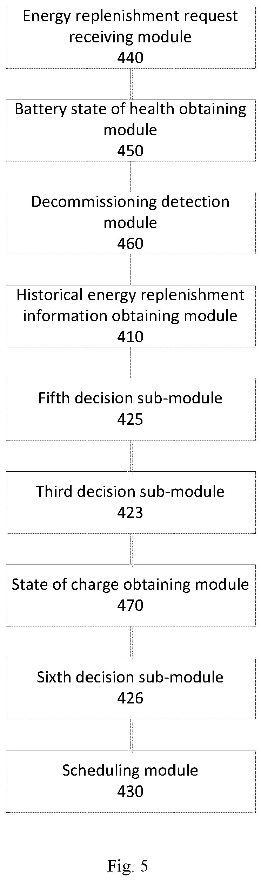

Please refer to Fig. 5, a battery balancing system according to the embodiment of the present invention includes the following modules.

An energy replenishment request receiving module 440 is configured to receive a battery energy replenishment request of the user (vehicle owner). Optionally, the battery energy replenishment request can include energy replenishment mode requirement information and/or energy replenishment time requirement information. For example, the battery energy replenishment request can specifically include whether to select time-limited service or reservation service.

A battery state of health obtaining module 450 is configured to obtain the state of health SOH of the battery.

The state of health SOH of the battery is a commonly used indicator to characterize the service life of the battery. The state of health SOH of the battery can be calculated according to known means. The state of health SOH of the battery can be pre-calculated and uploaded and stored in the Internet of Vehicles, when the state of health SOH of the battery needs to be called, the state of health SOH of the battery is obtained by reading the battery ID from the Internet of Vehicles.

A decommissioning detection module 460 is configured to judge whether the state of health of the battery on which the energy replenishment is about to perform is lower than or equal to a decommissioning set value of the power battery, if the judgment result is yes, determine the energy replenishment mode to be adopted by the battery as battery replacement, and perform step-by-step use on or withdraw the replaced battery from the circulation field.

The decommissioning set value of the power battery is a threshold value used for judging whether the battery should be decommissioned to enter step-by-step use or withdraw from the circulation field of the power battery. The specific value of the decommissioning set value of the power battery can be preset, and the specific value of the decommissioning set value of the power battery can also be obtained in the battery balancing process. Generally, the decommissioning set value of the power battery can be 80%.

The historical energy replenishment information obtaining module 410 is configured to obtain historical energy replenishment information. Specifically, the historical energy replenishment information obtaining module 410 is configured to:
obtain the ratio of the user using the dedicated slow charging device in the energy replenishment habit information of the user;
obtain battery replacement information in the historical energy replenishment information, wherein the dedicated slow charging device includes a household slow charging pile dedicated to the user; and
obtain the fast charging times of the battery within the recent charging mode cycle period in the historical energy replenishment information; and here, the length of one charging mode cycle period is set as five times in advance, and the target value of the fast charging times is set as once.

A fifth decision sub-module 425 of the analysis and decision module 420 is configured to judge whether the actual value of the ratio of the user using the dedicated slow charging device exceeds a preset target value of the ratio of the user using the dedicated slow charging device, and whether the battery is not replaced within a preset battery replacement period, and if the judgment result is yes, schedule the battery or guide the user to perform energy replenishment in the battery replacement mode. Therefore, through the battery replacement means, the battery undergoing excessive healthy use of the user flows into the energy replenishment scheduling range of the battery bank from the user, and the controllable range of energy replenishment scheduling is expanded.

In one example, the target value of the ratio of the user using the dedicated slow charging device is preset as 80%, the battery replacement period is preset as three months, and when the fifth decision sub-module 425 judges that the actual value of the ratio of the user using the dedicated slow charging device reaches or exceeds 80 % and that the user does not perform battery replacement within three months, the user is guided to perform battery replacement on the battery being used at present.

A third decision sub-module 423 of the analysis and decision module 420 is configured to judge whether the obtained fast charging times of the battery within the recent charging mode cycle period reach a preset target value of the fast charging times, if the actual value of the fast charging times is 1, perform the energy replenishment on the battery in the slow charging mode, or, perform battery replacement energy replenishment, and perform slow charging energy replenishment on the replaced battery, and if the actual value of the fast charging times is zero, perform the energy replenishment on the battery in the fast charging mode, or perform fast charging energy replenishment on the replaced battery.

A state of charge obtaining module 470 is configured to obtain the state of charge (State of Charge, abbreviated as SOC) of the battery on which the energy replenishment is about to perform. The state of charge SOC of the battery is used for indicating the dump energy of the battery.

A sixth decision sub-module 426 of the analysis and decision module 420 is configured to, according to the battery energy replenishment request and the state of charge of the battery, if it is judged that energy replenishment is performed according to the charging mode determined in the previous step, and that the requirements of the energy replenishment time and energy replenishment mode in the battery energy replenishment request cannot be satisfied, schedule the battery or guide the user to perform energy replenishment in the battery replacement mode, and perform the energy replenishment on the replaced battery according to the charging mode determined in the previous step; and if the requirements of the energy replenishment time and energy replenishment mode can be satisfied, perform the energy replenishment according to the originally determined charging mode. It should be noted that, in fact, an estimated charging time can be obtained by using the state of charge and the charging current and voltage to be adopted.

In one example, the battery energy replenishment request can select to perform the time-limited service or the reservation service, after it is judged that the slow charging energy replenishment should be performed on the battery on which the energy replenishment is about to perform, whether the time-limited service or the reservation service is selected in the battery energy replenishment request initiated by the user is judged, if the time-limited service is selected, then the battery is scheduled to move to the battery replacement station to use the battery replacement service, and if the reservation service is selected, then the battery is scheduled to use the slow charging service, or, the battery is scheduled to use the battery replacement service, and the slow charging energy replenishment is performed on the replaced battery.

The scheduling module 430 is configured to, after the energy replenishment strategy is determined, perform energy replenishment scheduling according to the energy replenishment strategy.

The battery balancing system of the present invention can be implemented through a cloud server, cloud analysis, and/or cloud scheduling. In some embodiments, the battery balancing system of the present invention includes:
a cloud recording module, configured to record the historical energy replenishment information in the cloud server in advance. Each power battery can be monitored for the entire life cycle from the first time it is put into use, the battery information is recorded in the cloud server, and the battery information can include: the state of health of the battery, the charging times, every charging mode (specifically can be charging current and voltage, or AC or DC, or fast charging or slow charging can be directly recorded), the state of charge or the dump energy or the like. Similarly, the energy replenishment habit information of the vehicle user can also be stored in the cloud server.

The historical energy replenishment information obtaining module 410 is specifically configured to obtain the historical energy replenishment information from the cloud server.

The analysis and decision module 420 is specifically configured to analyze the obtained historical energy replenishment information through the cloud to determine the energy replenishment strategy.

The scheduling module 430 is configured to perform cloud-based scheduling on the battery or perform cloud-based guidance on the user of the battery according to the determined energy replenishment strategy.

Optionally, the batteries put into use in the same batch (or at the same time) can be actively counted according to the method of the foregoing embodiment periodically (for example, a period of three months), among users who do not periodically perform battery replacement, the users who often use household charging piles or users who frequently use fast charging piles are guided, suggested or scheduled to guide them to perform battery replacement, so as to ensure that the same batch of batteries can be used in a balanced manner, the overall efficiency is improved, and the service life is prolonged. In some embodiments, the battery balancing system of the present invention includes: a periodic inventory module configured to, for batteries put into use in the same batch, periodically obtain the historical energy replenishment information, periodically determine the energy replenishment strategy, and periodically guide the user of the battery according to the energy replenishment strategy. The above-mentioned guidance can be conducted through user operation means such as issuing battery replacement coupons, and providing free battery replacement services or free vehicle maintenance, etc.

It should be noted that, in the foregoing various method and system embodiments, each of the actual values and target values of various use degrees (such as the aforementioned battery fast charging/slow charging ratio, the fast charging/slow charging times of the battery in one charging mode cycle period and other battery use degrees, the ratio of the user using the dedicated slow charging device and other user use degrees) can be a specific, absolute values that only considers a single battery or a single user, and is used for representing the specific conditions of past energy replenishment of the single battery itself or a single battery user, and can also be a ranked, relative value that considers multiple batteries or multiple users within a large range. For example, the ranking battery use degree of a battery can be used for representing the ranking of the battery among all batteries in the battery bank (or the ranking of battery among multiple or all batteries in the same batch) for the battery use degree, and the ranking user use degree of one user can be used for representing the ranking of a battery user among all users (or multiple users using the same batch) for the user use degree. In fact, after the step of obtaining the historical energy replenishment information (including the fast charging use degree and/or slow charging use degree) in this method, in view of the fast charging/slow charging use degree, the ranking of the battery among all batteries in the same batch is obtained (for the user use degree, the ranking of the battery user among all users using different batches of batteries can also be obtained), so as to obtain convert the obtained single type use degree into the ranking use degree.

Illustratively, in one example, if the set target value of the ratio of the user using the dedicated slow charging device is a single type (absolute type) use degree target value: 80%, then the judging whether the actual value of the ratio of the user using the dedicated slow charging device reaches or exceeds the target value 80% performed in the step S205 in the forgoing method example (the fifth decision sub-module 425 in the system example) can be specifically: judging whether the energy replenishment times performed by the user by using the dedicated slow charging device within a preset time period reach or exceed 80% of the total energy replenishment times performed by the user; and
in another example, if the set target value of the ratio of the user using the dedicated slow charging device is a ranking type (relative type) use degree target value: 80%, then the obtaining the ratio of the user using the dedicated slow charging device performed in the step S204 in the forgoing method example can be specifically: in view of the use degree, that is, the ratio of the user using the dedicated slow charging device, obtaining the ranking of the battery user among all users using the same batch of batteries (the use degree can be obtained at first, and then is ranked with the existing use degree data of the other users), and the judging whether the actual value of the ratio of the user using the dedicated slow charging device reaches or exceeds the target value 80% performed in the step S205 can be specifically: in view of the use degree, that is, the ratio of the user using the dedicated slow charging device, judging whether the user is ranked in the top 20% of all users using the batch of batteries.

In addition, it should be noted that, in the foregoing various method and system embodiments of the present invention, fast charging and slow charging can be, but not limited to, respectively: the fast charging mode includes charging through the DC charging pile, and the slow charging mode includes charging through the AC charging pile. In fact, charging with large current (e.g., greater than 1C) can be defined as fast charging, and charging with smaller current (e.g., less than 0.5C) can be defined as slow charging. Or, the fast charging and the slow charging can also be defined not by absolute definition, but by relatively fast and relatively slow.

Further, the embodiment of the present invention further provides a controller, including a memory and a processor, the memory stores a computer program, and the program can implement the steps of any foregoing battery balancing method when executed by the processor. It should be understood that instructions stored in the memory correspond to the steps of a specific example of the battery balancing method that the instructions can implement when executed by the processor.

Further, the embodiment of the present invention further provides a computer-readable storage medium for storing computer instructions, and the instructions implement the steps of any foregoing battery balancing method when executed by a computer or a processor. It should be understood that the instructions stored in the computer-readable storage medium correspond to the steps of a specific example of the battery balancing method that the instruction can implement when executed.

The above descriptions are only the preferred embodiments of the present invention, and do not limit the present invention in any form. Although the present invention has been disclosed in the preferred embodiments as above, the preferred embodiments are not used for limiting the present invention, the scope of which is defined by the claims.

## Claims

1. A battery balancing method for balancing the health of multiple batteries, comprising the following steps:
obtaining historical energy replenishment information for a plurality of batteries, wherein the historical energy replenishment information comprises a fast charging use degree and/or a slow charging use degree, wherein the obtaining the historical energy replenishment information of the battery comprises: obtaining the historical energy replenishment information from a cloud server;
judging whether the fast charging use degree and/or the slow charging use degree is higher than a corresponding set value for a battery of the plurality of batteries, and determining an energy replenishment strategy of the battery according to the judgment result, wherein the determining an energy replenishment strategy at least comprises: determining an energy replenishment mode to be adopted as fast charging, slow charging or battery replacement; and
performing energy replenishment scheduling according to the energy replenishment strategy for the battery, wherein the energy replenishment scheduling comprises scheduling of the battery and/or guidance to a user using the battery;
wherein the energy replenishment scheduling comprises: performing scheduling on the battery based on the cloud and/or guiding the user based on the cloud;
wherein the judging whether the fast charging use degree and/or the slow charging use degree is higher than a corresponding set value for a battery of the plurality of batteries, and determining an energy replenishment strategy of the battery according to the judgment result comprising: when the slow charging use degree of the battery is higher than the target value of the slow charging use degree or the fast charging use degree of the battery is lower than the target value of the fast charging use degree, determining the energy replenishment mode to be adopted by the battery as a fast charging mode, and when the fast charging use degree of the battery is higher than the target value of the fast charging use degree or the slow charging use degree of the battery is lower than the target value of the slow charging use degree, determining the energy replenishment mode to be adopted by the battery as a slow charging mode, so that the states of health of the plurality of batteries be balanced to be basically consistent.

2. The method according to claim 1, wherein:
the battery balancing method further comprises: recording the historical energy replenishment information in a cloud server in advance;
the judging whether the fast charging use degree and/or the slow charging use degree is higher than a corresponding set value, and determining an energy replenishment strategy of a battery according to the judgment result comprises: determining the energy replenishment strategy by analyzing the historical energy replenishment information through the cloud.

3. The method according to claim 1 or 2, wherein:
the fast charging use degree comprises a battery fast charging ratio, and the battery fast charging ratio refers to a proportion of the fast charging times of the battery to the total charging times starting from the use of the battery or within a preset time period; and
the judging whether the fast charging use degree and/or the slow charging use degree is higher than a corresponding set value, and determining an energy replenishment strategy of a battery according to the judgment result comprises: judging whether an actual value of the battery fast charging ratio reaches or exceeds a preset target value of the fast charging ratio, if the judgment result is yes, performing energy replenishment on the battery in a slow charging mode, or otherwise, performing the energy replenishment on the battery in a fast charging mode.

4. The method according to claim 1 or 2, wherein:
the slow charging use degree comprises a battery slow charging ratio, and the battery slow charging ratio refers to a proportion of the slow charging times of the battery to the total charging times starting from the use of the battery or within a preset time period; and
the judging whether the fast charging use degree and/or the slow charging use degree is higher than a corresponding set value, and determining an energy replenishment strategy of a battery according to the judgment result comprises: judging whether the actual value of the battery slow charging ratio reaches or exceeds a preset target value of the slow charging ratio, if the judgment result is yes, performing energy replenishment on the battery in the fast charging mode, or otherwise, performing the energy replenishment on the battery in the slow charging mode.

5. The method according to claim 1 or 2, wherein:
the fast charging use degree comprises the fast charging times of the battery within a charging mode cycle period, and the charging mode cycle period refers to a period composed of successive multiple charging operations of the battery; and
the judging whether the fast charging use degree and/or the slow charging use degree is higher than a corresponding set value, and determining an energy replenishment strategy of a battery according to the judgment result comprises: judging whether the actual value of the fast charging times of the battery within the recent charging mode cycle period reach or exceed a preset target value of the fast charging times, if the judgment result is yes, performing energy replenishment on the battery in the slow charging mode, or otherwise, performing the energy replenishment on the battery in the fast charging mode.

6. The method according to claim 1 or 2, wherein:
the slow charging use degree comprises the slow charging times of the battery within a charging mode cycle period, and the charging mode cycle period refers to a period composed of successive multiple charging operations of the battery; and
the judging whether the fast charging use degree and/or the slow charging use degree is higher than a corresponding set value, and determining an energy replenishment strategy of a battery according to the judgment result comprises: judging whether the actual value of the slow charging times of the battery within the recent charging mode cycle period reach or exceed a preset target value of the slow charging times, if the judgment result is yes, performing energy replenishment on the battery in the fast charging mode, or otherwise, performing the energy replenishment on the battery in the slow charging mode.

7. The method according to claim 1 or 2, wherein:
the historical energy replenishment information comprises energy replenishment habit information of the user using the battery, and the fast charging use degree comprises a degree of the user using a fast charging device, or the slow charging use degree comprises a degree of the user using a slow charging device.

8. A battery balancing system for balancing the health of multiple batteries, comprising:
a historical energy replenishment information obtaining module, configured to obtain historical energy replenishment information for a plurality of batteries, wherein the historical energy replenishment information comprises a fast charging use degree and/or a slow charging use degree, the historical energy replenishment information obtaining module is specifically configured to obtain the historical energy replenishment information from a cloud server;
an analysis and decision module, configured to judge whether the fast charging use degree and/or the slow charging use degree is higher than a corresponding set value for a battery of the plurality of batteries, and determine an energy replenishment strategy of the battery according to the judgment result, wherein the determining an energy replenishment strategy at least comprises: determining an energy replenishment mode to be adopted as fast charging, slow charging or battery replacement; and
a scheduling module, configured to perform energy replenishment scheduling according to the energy replenishment strategy for the battery, wherein the energy replenishment scheduling comprises scheduling of the battery and/or guidance to a user using the battery;
the scheduling module is specifically configured to perform scheduling on the battery based on the cloud and/or guide the user based on cloud;
wherein the analysis and decision module is specifically configured to when the slow charging use degree of the battery is higher than the target value of the slow charging use degree or the fast charging use degree of the battery is lower than the target value of the fast charging use degree, determining the energy replenishment mode to be adopted by the battery as a fast charging mode, and when the fast charging use degree of the battery is higher than the target value of the fast charging use degree or the slow charging use degree of the battery is lower than the target value of the slow charging use degree, determining the energy replenishment mode to be adopted by the battery as a slow charging mode, so that the states of health of the plurality of batteries be balanced to be basically consistent.

9. The system according to claim 8, wherein:
the system further comprises: a cloud recording module, configured to record the historical energy replenishment information in a cloud server in advance;
the analysis and decision module is specifically configured to determine the energy replenishment strategy by analyzing the historical energy replenishment information through the cloud

10. The system according to claim 8 or 9, wherein:
the fast charging use degree comprises a battery fast charging ratio, and the battery fast charging ratio refers to a proportion of the fast charging times of the battery to the total charging times starting from the use of the battery or within a preset time period; and
the analysis and decision module comprises a first decision sub-module, configured to judge whether an actual value of the battery fast charging ratio reaches or exceeds a preset target value of the fast charging ratio, if the judgment result is yes, perform energy replenishment on the battery in a slow charging mode, or otherwise, perform the energy replenishment on the battery in a fast charging mode.

11. The system according to claim 8 or 9, wherein:
the slow charging use degree comprises a battery slow charging ratio, and the battery slow charging ratio refers to a proportion of the slow charging times of the battery to the total charging times starting from the use of the battery or within a preset time period; and
the analysis and decision module comprises a second decision sub-module, configured to judge whether the actual value of the battery slow charging ratio reaches or exceeds a preset target value of the slow charging ratio, if the judgment result is yes, perform energy replenishment on the battery in the fast charging mode, or otherwise, perform the energy replenishment on the battery in the slow charging mode.

12. The system according to claim 8 or 9, wherein:
the fast charging use degree comprises the fast charging times of the battery within a charging mode cycle period, and the charging mode cycle period refers to a period composed of successive multiple charging operations of the battery; and
the analysis and decision module comprises a third decision sub-module, configured to judge whether the actual value of the fast charging times of the battery within the recent charging mode cycle period reach or exceed a preset target value of the fast charging times, if the judgment result is yes, perform energy replenishment on the battery in the slow charging mode, or otherwise, perform the energy replenishment on the battery in the fast charging mode.

13. The system according to claim 8 or 9, wherein:
the slow charging use degree comprises the slow charging times of the battery within a charging mode cycle period, and the charging mode cycle period refers to a period composed of successive multiple charging operations of the battery; and
the analysis and decision module comprises a fourth decision sub-module, configured to judge whether the actual value of the slow charging times of the battery within the recent charging mode cycle period reach or exceed a preset target value of the slow charging times, if the judgment result is yes, perform energy replenishment on the battery in the fast charging mode, or otherwise, perform the energy replenishment on the battery in the slow charging mode.

14. A controller, comprising a memory and a processor, the memory stores a computer program, and the program can implement the steps of the battery balancing method according to any one of claims 1-7 when executed by the processor.

15. A computer-readable storage medium, for storing computer instructions, wherein the instructions implement the steps of the battery balancing method according to any one of claims 1-7 when executed by a computer or a processor.

## Patentansprüche

1. Batterieausgleichsverfahren zum Ausgleichen des Zustandes mehrerer Batterien, die folgenden Schritte umfassend:
Gewinnen historischer Informationen zum Auffüllen von Energie für eine Vielzahl von Batterien, wobei die historischen Informationen zum Auffüllen von Energie einen Nutzungsgrad des Schnellladens und/oder einen Nutzungsgrad langsamen Ladens umfassen, wobei das Gewinnen der historischen Informationen zum Auffüllen von Energie der Batterie Folgendes umfasst: Gewinnen der historischen Informationen zum Auffüllen von Energie von einem Cloud-Server,
Beurteilen, ob der Nutzungsgrad des Schnelladens und/oder der Nutzungsgrad des langsamen Ladens höher als ein entsprechender eingestellter Wert für eine Batterie der Vielzahl von Batterien ist/sind, und Bestimmen einer Energieauffüllstrategie der Batterie gemäß dem Beurteilungsergebnis, wobei das Bestimmen einer Energieauffüllstrategie mindestens Folgendes umfasst: Bestimmen eines Energieauffüllmodus, der übernommen werden soll, als Schnellladen, langsames Laden oder Batterieaustausch, und
Durchführen einer Energieauffüllplanung gemäß der Energieauffüllstrategie für die Batterie, wobei die Energieauffüllplanung eine Planung der Batterie und/oder eine Anleitung an einen Benutzer, der die Batterie verwendet, umfasst,
wobei die Energieauffüllplanung Folgendes umfasst: Durchführen der Planung an der Batterie basierend auf der Cloud und/oder Anleiten des Benutzers basierend auf der Cloud,
wobei das Beurteilen, ob der Nutzungsgrad des Schnelladens und/oder der Nutzungsgrad des langsamen Ladens höher als ein entsprechender eingestellter Wert für eine Batterie der Vielzahl von Batterien ist/sind, und das Bestimmen einer Energieauffüllstrategie der Batterie gemäß dem Beurteilungsergebnis Folgendes umfasst: Bestimmen des Energieauffüllmodus, der durch die Batterie übernommen werden soll, als Schnelllademodus, wenn der Nutzungsgrad des langsamen Ladens der Batterie höher als der Sollwert des Nutzungsgrades des Schnellladens ist oder der Nutzungsgrad des Schnelladens der Batterie kleiner als der Sollwert des Nutzungsgrades des Schnellladens ist, und Bestimmen des Energieauffüllmodus, der durch die Batterie übernommen werden soll, als Modus des langsamen Ladens, wenn der Nutzungsgrad des Schnellladens der Batterie höher als der Sollwert des Nutzungsgrades des Schnelladens ist oder der Nutzungsgrad des langsamen Ladens der Batterie kleiner als der Sollwert des Nutzungsgrades des langsamen Ladens ist, so dass die Zustände der Vielzahl von Batterien so ausgeglichen werden, dass sie im Grunde einheitlich sind.

2. Verfahren nach Anspruch 1, wobei:
das Batterieausgleichsverfahren ferner Folgendes umfasst: Aufzeichnen der historischen Informationen zum Auffüllen von Energie im Voraus in einem Cloud-Server,
das Beurteilen, ob der Nutzungsgrad des Schnelladens und/oder der Nutzungsgrad des langsamen Ladens höher als ein entsprechender eingestellter Wert ist/sind, und das Bestimmen einer Energieauffüllstrategie einer Batterie gemäß dem Bewertungsergebnis Folgendes umfasst: Bestimmen der Energieauffüllstrategie durch Analysieren der historischen Informationen zum Auffüllen von Energie über die Cloud.

3. Verfahren nach Anspruch 1 oder 2, wobei:
der Nutzungsgrad des Schnelladens ein Batterieschnellladeverhältnis umfasst und sich das Batterieschnellladeverhältnis auf eine Proportion der Häufigkeit des Schnellladens der Batterie zu der gesamten Häufigkeit des Ladens, beginnend mit der Nutzung der Batterie oder innerhalb einer voreingestellten Zeitspanne, bezieht, und
das Beurteilen, ob der Nutzungsgrad des Schnelladens und/oder der Nutzungsgrad des langsamen Ladens höher als ein entsprechender eingestellter Wert ist/sind, und das Bestimmen einer Energieauffüllstrategie einer Batterie gemäß dem Bewertungsergebnis Folgendes umfasst: Beurteilen, ob ein tatsächlicher Wert des Batterieschnellladeverhältnisses einen voreingestellten Sollwert des Schnellladeverhältnisses erreicht oder überschreitet, wenn das Beurteilungsergebnis ja ist, Durchführen eines Auffüllens von Energie an der Batterie in einem Modus langsamen Ladens oder sonst Durchführen des Auffüllens von Energie an der Batterie in einem Schnellademodus.

4. Verfahren nach Anspruch 1 oder 2, wobei:
der Nutzungsgrad langsamen Ladens ein Verhältnis langsamen Batterieladens umfasst und sich das Verhältnis langsamen Batterieladens auf eine Proportion der Häufigkeit des langsamen Ladens der Batterie zu der gesamten Häufigkeit des Ladens, beginnend mit der Nutzung der Batterie oder innerhalb einer voreingestellten Zeitspanne, bezieht, und
das Beurteilen, ob der Nutzungsgrad des Schnelladens und/oder der Nutzungsgrad des langsamen Ladens höher als ein entsprechender eingestellter Wert ist/sind, und das Bestimmen einer Energieauffüllstrategie einer Batterie gemäß dem Bewertungsergebnis Folgendes umfasst: Beurteilen, ob ein tatsächlicher Wert des Verhältnisses langsamen Batterieladens einen voreingestellten Sollwert des Verhältnisses langsamen Ladens erreicht oder überschreitet, wenn das Beurteilungsergebnis ja ist, Durchführen eines Auffüllens von Energie an der Batterie in dem Schnelllademodus oder sonst Durchführen des Auffüllens von Energie an der Batterie in dem Modus langsamen Ladens.

5. Verfahren nach Anspruch 1 oder 2, wobei:
der Nutzungsgrad des Schnelladens die Häufigkeit des Schnellladens der Batterie innerhalb einer Lademoduszyklusperiode umfasst und sich die Lademoduszyklusperiode auf eine Periode bezieht, die aus mehreren aufeinanderfolgenden Ladevorgängen der Batterie besteht, und
das Beurteilen, ob der Nutzungsgrad des Schnelladens und/oder der Nutzungsgrad des langsamen Ladens höher als ein entsprechender eingestellter Wert ist/sind, und das Bestimmen einer Energieauffüllstrategie einer Batterie gemäß dem Bewertungsergebnis Folgendes umfasst: Beurteilen, ob der tatsächliche Wert der Häufigkeit des Schnellladens der Batterie innerhalb der letzten Lademoduszyklusperiode einen voreingestellten Sollwert der Häufigkeit des Schnellladens erreicht oder überschreitet, wenn das Beurteilungsergebnis ja ist, Durchführen eines Auffüllens von Energie an der Batterie in dem Modus langsamen Ladens oder sonst Durchführen des Auffüllens von Energie an der Batterie in dem Schnelllademodus.

6. Verfahren nach Anspruch 1 oder 2, wobei:
der Nutzungsgrad langsamen Ladens die Häufigkeit des langsamen Ladens der Batterie innerhalb einer Lademoduszyklusperiode umfasst und sich die Lademoduszyklusperiode auf eine Periode bezieht, die aus mehreren aufeinanderfolgenden Ladevorgängen der Batterie besteht, und
das Beurteilen, ob der Nutzungsgrad des Schnelladens und/oder der Nutzungsgrad des langsamen Ladens höher als ein entsprechender eingestellter Wert sind, und das Bestimmen einer Energieauffüllstrategie einer Batterie gemäß dem Bewertungsergebnis Folgendes umfasst: Beurteilen, ob der tatsächliche Wert der Häufigkeit des langsamen Ladens der Batterie innerhalb der letzten Lademoduszyklusperiode einen voreingestellten Sollwert der Häufigkeit langsamen Ladens erreicht oder überschreitet, wenn das Beurteilungsergebnis ja ist, Durchführen eines Auffüllens von Energie an der Batterie in dem Schnelllademodus oder sonst Durchführen des Auffüllens von Energie an der Batterie in dem Modus langsamen Ladens.

7. Verfahren nach Anspruch 1 oder 2, wobei:
die historischen Informationen zum Auffüllen von Energie Informationen zu Gewohnheiten des Benutzers, der die Batterie verwendet, beim Auffüllen von Energie umfassen und der Nutzungsgrad des Schnelladens einen Grad umfasst, in dem der Benutzer eine Schnellladevorrichtung verwendet, oder der Nutzungsgrad langsamen Ladens einen Grad umfasst, in dem der Benutzer eine Vorrichtung zum langsamen Laden verwendet.

8. Batterieausgleichssystem zum Ausgleichen des Zustandes mehrerer Batterien, Folgendes umfassend:
ein Modul zum Gewinnen historischer Informationen zum Auffüllen von Energie, das zum Gewinnen historischer Informationen zum Auffüllen von Energie für eine Vielzahl von Batterien konfiguriert ist, wobei die historischen Informationen zum Auffüllen von Energie einen Nutzungsgrad des Schnellladens und/oder einen Nutzungsgrad langsamen Ladens umfassen, wobei das Modul zum Gewinnen historischer Informationen zum Auffüllen von Energie spezifisch zum Gewinnen der historischen Informationen zum Auffüllen von Energie von einem Cloud-Server konfiguriert ist,
ein Analyse- und Entscheidungsmodul, das zum Beurteilen konfiguriert ist, ob der Nutzungsgrad des Schnelladens und/oder der Nutzungsgrad des langsamen Ladens höher als ein entsprechender eingestellter Wert für eine Batterie der Vielzahl von Batterien ist/sind, und zum Bestimmen einer Energieauffüllstrategie gemäß dem Beurteilungsergebnis, wobei das Bestimmen einer Energieauffüllstrategie zumindest Folgendes umfasst: Bestimmen eines Energieauffüllmodus, der übernommen werden soll, als Schnellladen, langsames Laden oder Batterieaustausch, und
ein Planungsmodul, das zum Durchführen einer Energieauffüllplanung gemäß der Energieauffüllstrategie für die Batterie konfiguriert ist, wobei die Energieauffüllplanung eine Planung der Batterie und/oder eine Anleitung an einen Benutzer, der die Batterie verwendet, umfasst,
wobei das Planungsmodul spezifisch für das Durchführen der Planung an der Batterie basierend auf der Cloud und/oder das Anleiten des Benutzers basierend auf der Cloud konfiguriert ist,
wobei das Analyse- und Entscheidungsmodul spezifisch für das Bestimmen konfiguriert ist, den von der Batterie anzuwendenden Energieauffüllmodus als den Schnelllademodus zu bestimmen, wenn der Nutzungsgrad des langsamen Ladens der Batterie höher als der Sollwert des Nutzungsgrades langsamen Ladens ist oder der Nutzungsgrad des Schnelladens der Batterie niedriger ist als der Sollwert des Nutzungsgrades des Schnellladens, und das Bestimmen des durch die Batterie anzuwendenden Energieauffüllmodus als einen Modus des langsamen Ladens, wenn der Nutzungsgrad des Schnelladens der Batterie höher als der Sollwert des Nutzungsgrades des Schnellladens ist oder der Nutzungsgrad des langsamen Ladens der Batterie kleiner ist als der Sollwert des Nutzungsgrades des langsamen Ladens, so dass die Zustände der Vielzahl von Batterien so ausgeglichen sind, dass sie im Grunde einheitlich sind.

9. System nach Anspruch 8, wobei:
das System ferner Folgendes umfasst: ein Cloud-Aufzeichnungsmodul, das zum Aufzeichnen der historischen Informationen zum Auffüllen von Energie im Voraus in einem Cloud-Server konfiguriert ist,
das Analyse- und Entscheidungsmodul spezifisch für das Bestimmen der Energieauffüllstrategie durch Analysieren der historischen Informationen zum Auffüllen von Energie über die Cloud konfiguriert ist.

10. System nach Anspruch 8 oder 9, wobei:
der Nutzungsgrad des Schnelladens ein Batterieschnellladeverhältnis umfasst und sich das Batterieschnellladeverhältnis auf eine Proportion der Häufigkeit des Schnellladens der Batterie zu der gesamten Häufigkeit des Ladens, beginnend mit der Nutzung der Batterie oder innerhalb einer voreingestellten Zeitspanne, bezieht, und
das Analyse- und Entscheidungsmodul ein erstes Entscheidungsuntermodul umfasst, das zum Beurteilen konfiguriert ist, ob ein tatsächlicher Wert des Batterieschnellladeverhältnisses einen voreingestellten Sollwert des Schnellladeverhältnisses erreicht oder überschreitet, wenn das Beurteilungsergebnis ja ist, Durchführen eines Auffüllens von Energie an der Batterie in einem Modus langsamen Ladens oder sonst Durchführen des Auffüllens von Energie an der Batterie in einem Schnellademodus.

11. System nach Anspruch 8 oder 9, wobei:
der Nutzungsgrad langsamen Ladens ein Verhältnis langsamen Batterieladens umfasst und sich das Verhältnis langsamen Batterieladens auf eine Proportion der Häufigkeit des langsamen Ladens der Batterie zu der gesamten Häufigkeit des Ladens, beginnend mit der Nutzung der Batterie oder innerhalb einer voreingestellten Zeitspanne, bezieht, und
das Analyse- und Entscheidungsmodul ein zweites Entscheidungsuntermodul umfasst, das zum Beurteilen konfiguriert ist, ob der tatsächliche Wert des Verhältnisses langsamen Batterieladens einen voreingestellten Sollwert des Verhältnisses langsamen Ladens erreicht oder überschreitet, wenn das Beurteilungsergebnis ja ist, Durchführen eines Auffüllens von Energie an der Batterie in dem Schnelllademodus oder sonst Durchführen des Auffüllens von Energie an der Batterie in dem Modus langsamen Ladens.

12. System nach Anspruch 8 oder 9, wobei:
der Nutzungsgrad des Schnelladens die Häufigkeit des Schnellladens der Batterie innerhalb einer Lademoduszyklusperiode umfasst und sich die Lademoduszyklusperiode auf eine Periode bezieht, die aus mehreren aufeinanderfolgenden Ladevorgängen der Batterie besteht, und
das Analyse- und Entscheidungsmodul ein drittes Entscheidungsuntermodul umfasst, das zum Beurteilen konfiguriert ist, ob der tatsächliche Wert der Häufigkeit des Schnellladens der Batterie innerhalb der letzten Lademoduszyklusperiode einen voreingestellten Sollwert der Häufigkeit des Schnellladens erreicht oder überschreitet, wenn das Beurteilungsergebnis ja ist, Durchführen eines Auffüllens von Energie an der Batterie in dem Modus langsamen Ladens oder sonst Durchführen des Auffüllens von Energie an der Batterie in dem Schnelllademodus.

13. System nach Anspruch 8 oder 9, wobei:
der Nutzungsgrad langsamen Ladens die Häufigkeit des langsamen Ladens der Batterie innerhalb einer Lademoduszyklusperiode umfasst und sich die Lademoduszyklusperiode auf eine Periode bezieht, die aus mehreren aufeinanderfolgenden Ladevorgängen der Batterie besteht, und
das Analyse- und Entscheidungsmodul ein viertes Entscheidungsuntermodul umfasst, das zum Beurteilen konfiguriert ist, ob der tatsächliche Wert der Häufigkeit des langsamen Ladens der Batterie innerhalb der letzten Lademoduszyklusperiode einen voreingestellten Sollwert der Häufigkeit langsamen Ladens erreicht oder überschreitet, wenn das Beurteilungsergebnis ja ist, Durchführen eines Auffüllens von Energie an der Batterie in dem Schnelllademodus oder sonst Durchführen des Auffüllens von Energie an der Batterie in dem Modus langsamen Ladens.

14. Steuerung, einen Speicher und einen Prozessor umfassend, wobei der Speicher ein Computerprogramm speichert und das Programm bei Ausführung durch den Prozessor die Schritte des Batterieausgleichsverfahrens nach einem der Ansprüche 1 bis 7 implementieren kann.

15. Computerlesbares Speichermedium zum Speichern von Computeranweisungen, wobei die Anweisungen bei Ausführung durch einen Computer oder einen Prozessor die Schritte des Batterieausgleichsverfahrens nach einem der Ansprüche 1 bis 7 implementieren.

## Revendications

1. Procédé d'équilibrage de batteries destiné à équilibrer la santé de multiples batteries, comportant les étapes suivantes :
obtenir des informations historiques de réapprovisionnement en énergie pour une pluralité de batteries, les informations historiques de réapprovisionnement en énergie comportant un degré d'utilisation de charge rapide et/ou un degré d'utilisation de charge lente, l'obtention des informations historiques de réapprovisionnement en énergie de la batterie comportant : l'obtention des informations historiques de réapprovisionnement en énergie à partir d'un serveur en nuage ;
juger si le degré d'utilisation de charge rapide et/ou le degré d'utilisation de charge lente est supérieur à une valeur spécifiée correspondante pour une batterie de la pluralité de batteries, et déterminer une stratégie de réapprovisionnement en énergie de la batterie selon le résultat du jugement, la détermination d'une stratégie de réapprovisionnement en énergie comportant au moins : la détermination d'un mode de réapprovisionnement en énergie à adopter comme étant une charge rapide, une charge lente ou un remplacement de batterie ; et
effectuer une planification de réapprovisionnement en énergie selon la stratégie de réapprovisionnement en énergie pour la batterie, la planification de réapprovisionnement en énergie comportant une planification de la batterie et/ou des préconisations à un utilisateur utilisant la batterie ;
la planification de réapprovisionnement en énergie comportant : le fait d'effectuer une planification sur la batterie d'après le nuage et/ou de guider l'utilisateur d'après le nuage ;
le fait de juger si le degré d'utilisation de charge rapide et/ou le degré d'utilisation de charge lente est supérieur à une valeur spécifiée correspondante pour une batterie de la pluralité de batteries, et de déterminer une stratégie de réapprovisionnement en énergie de la batterie selon le résultat du jugement comportant : lorsque le degré d'utilisation de charge lente de la batterie est supérieur à la valeur cible du degré d'utilisation de charge lente ou le degré d'utilisation de charge rapide de la batterie est inférieur à la valeur cible du degré d'utilisation de charge rapide, la détermination du mode de réapprovisionnement en énergie à adopter par la batterie comme étant un mode de charge rapide, et lorsque le degré d'utilisation de charge rapide de la batterie est supérieur à la valeur cible du degré d'utilisation de charge rapide ou le degré d'utilisation de charge lente de la batterie est inférieur à la valeur cible du degré d'utilisation de charge lente, la détermination du mode de réapprovisionnement en énergie à adopter par la batterie comme étant un mode de charge lente, de telle sorte que les états de santé de la pluralité de batteries soient équilibrés pour être fondamentalement cohérents.

2. Procédé selon la revendication 1 :
le procédé d'équilibrage de batteries comportant en outre : l'enregistrement à l'avance des informations historiques de réapprovisionnement en énergie dans un serveur en nuage ;
le fait de juger si le degré d'utilisation de charge rapide et/ou le degré d'utilisation de charge lente est supérieur à une valeur spécifiée correspondante, et de déterminer une stratégie de réapprovisionnement en énergie d'une batterie selon le résultat du jugement comportant : la détermination de la stratégie de réapprovisionnement en énergie en analysant les informations historiques de réapprovisionnement en énergie par l'intermédiaire du nuage.

3. Procédé selon la revendication 1 ou 2 :
le degré d'utilisation de charge rapide comportant un rapport de charge rapide de la batterie, et le rapport de charge rapide de la batterie désignant une proportion des temps de charge rapide de la batterie aux temps de charge totaux à partir de l'utilisation de la batterie ou au cours d'une période prédéfinie ; et
le fait de juger si le degré d'utilisation de charge rapide et/ou le degré d'utilisation de charge lente est supérieur à une valeur spécifiée correspondante, et de déterminer une stratégie de réapprovisionnement en énergie d'une batterie selon le résultat du jugement comportant : le fait de juger si une valeur réelle du rapport de charge rapide de la batterie atteint ou dépasse une valeur cible prédéfinie du rapport de charge rapide, si le résultat du jugement est oui, d'effectuer un réapprovisionnement en énergie sur la batterie dans un mode de charge lente, ou si ce n'est pas le cas, d'effectuer le réapprovisionnement en énergie sur la batterie dans un mode de charge rapide.

4. Procédé selon la revendication 1 ou 2 :
le degré d'utilisation de charge lente comportant un rapport de charge lente de la batterie, et le rapport de charge lente de la batterie désignant une proportion des temps de charge lente de la batterie aux temps de charge totaux à partir de l'utilisation de la batterie ou au cours d'une période prédéfinie ; et
le fait de juger si le degré d'utilisation de charge rapide et/ou le degré d'utilisation de charge lente est supérieur à une valeur spécifiée correspondante, et de déterminer une stratégie de réapprovisionnement en énergie d'une batterie selon le résultat du jugement comportant : le fait de juger si la valeur réelle du rapport de charge lente de la batterie atteint ou dépasse une valeur cible prédéfinie du rapport de charge lente, si le résultat du jugement est oui, d'effectuer un réapprovisionnement en énergie sur la batterie dans le mode de charge rapide, ou si ce n'est pas le cas, d'effectuer le réapprovisionnement en énergie sur la batterie dans le mode de charge lente.

5. Procédé selon la revendication 1 ou 2 :
le degré d'utilisation de charge rapide comportant les temps de charge rapide de la batterie au cours d'une période de cycles de mode de charge, et la période de cycles de mode de charge désignant une période composée de multiples opérations de charge successives de la batterie ; et
le fait de juger si le degré d'utilisation de charge rapide et/ou le degré d'utilisation de charge lente est supérieur à une valeur spécifiée correspondante, et de déterminer une stratégie de réapprovisionnement en énergie d'une batterie selon le résultat du jugement comportant : le fait de juger si la valeur réelle des temps de charge rapide de la batterie au cours de la période récente de cycles de mode de charge atteint ou dépasse une valeur cible prédéfinie des temps de charge rapide, si le résultat du jugement est oui, d'effectuer un réapprovisionnement en énergie sur la batterie dans le mode de charge lente, ou si ce n'est pas le cas, d'effectuer le réapprovisionnement en énergie sur la batterie dans le mode de charge rapide.

6. Procédé selon la revendication 1 ou 2 :
le degré d'utilisation de charge lente comportant les temps de charge lente de la batterie au cours d'une période de cycles de mode de charge, et la période de cycles de mode de charge désignant une période composée de multiples opérations de charge successives de la batterie ; et
le fait de juger si le degré d'utilisation de charge rapide et/ou le degré d'utilisation de charge lente est supérieur à une valeur spécifiée correspondante, et de déterminer une stratégie de réapprovisionnement en énergie d'une batterie selon le résultat du jugement comportant : le fait de juger si la valeur réelle des temps de charge lente de la batterie au cours de la période récente de cycles de mode de charge atteint ou dépasse une valeur cible prédéfinie des temps de charge lente, si le résultat du jugement est oui, d'effectuer un réapprovisionnement en énergie sur la batterie dans le mode de charge rapide, ou si ce n'est pas le cas, d'effectuer le réapprovisionnement en énergie sur la batterie dans le mode de charge lente.

7. Procédé selon la revendication 1 ou 2 :
les informations historiques de réapprovisionnement en énergie comportant des informations d'habitudes de réapprovisionnement en énergie de l'utilisateur utilisant la batterie, et le degré d'utilisation de charge rapide comportant un degré d'utilisation par l'utilisateur d'un dispositif de charge rapide, ou le degré d'utilisation de charge lente comportant un degré d'utilisation par l'utilisateur d'un dispositif de charge lente.

8. Système d'équilibrage de batteries destiné à équilibrer la santé de multiples batteries, comportant :
un module d'obtention d'informations historiques de réapprovisionnement en énergie, configuré pour obtenir des informations historiques de réapprovisionnement en énergie pour une pluralité de batteries, les informations historiques de réapprovisionnement en énergie comportant un degré d'utilisation de charge rapide et/ou un degré d'utilisation de charge lente, le module d'obtention d'informations historiques de réapprovisionnement en énergie étant spécifiquement configuré pour obtenir les informations historiques de réapprovisionnement en énergie à partir d'un serveur en nuage ;
un module d'analyse et de décision, configuré pour juger si le degré d'utilisation de charge rapide et/ou le degré d'utilisation de charge lente est supérieur à une valeur spécifiée correspondante pour une batterie de la pluralité de batteries, et déterminer une stratégie de réapprovisionnement en énergie de la batterie selon le résultat du jugement, la détermination d'une stratégie de réapprovisionnement en énergie comportant au moins :
la détermination d'un mode de réapprovisionnement en énergie à adopter comme étant une charge rapide, une charge lente ou un remplacement de batterie ; et
un module de planification, configuré pour effectuer une planification de réapprovisionnement en énergie selon la stratégie de réapprovisionnement en énergie pour la batterie, la planification de réapprovisionnement en énergie comportant une planification de la batterie et/ou des préconisations à un utilisateur utilisant la batterie ;
le module de planification étant spécifiquement configuré pour effectuer une planification sur la batterie d'après le nuage et/ou guider l'utilisateur d'après le nuage ;
le module d'analyse et de décision étant spécifiquement configuré pour : lorsque le degré d'utilisation de charge lente de la batterie est supérieur à la valeur cible du degré d'utilisation de charge lente ou le degré d'utilisation de charge rapide de la batterie est inférieur à la valeur cible du degré d'utilisation de charge rapide, déterminer le mode de réapprovisionnement en énergie à adopter par la batterie comme étant un mode de charge rapide, et lorsque le degré d'utilisation de charge rapide de la batterie est supérieur à la valeur cible du degré d'utilisation de charge rapide ou le degré d'utilisation de charge lente de la batterie est inférieur à la valeur cible du degré d'utilisation de charge lente, déterminer le mode de réapprovisionnement en énergie à adopter par la batterie comme étant un mode de charge lente, de telle sorte que les états de santé de la pluralité de batteries soient équilibrés pour être fondamentalement cohérents.

9. Système selon la revendication 8 :
le système comportant en outre : un module d'enregistrement en nuage, configuré pour enregistrer à l'avance les informations historiques de réapprovisionnement en énergie dans un serveur en nuage ;
le module d'analyse et de décision étant spécifiquement configuré pour déterminer la stratégie de réapprovisionnement en énergie en analysant les informations historiques de réapprovisionnement en énergie par l'intermédiaire du nuage.

10. Système selon la revendication 8 ou 9 :
le degré d'utilisation de charge rapide comportant un rapport de charge rapide de la batterie, et le rapport de charge rapide de la batterie désignant une proportion des temps de charge rapide de la batterie aux temps de charge totaux à partir de l'utilisation de la batterie ou au cours d'une période prédéfinie ; et
le module d'analyse et de décision comportant un premier sous-module de décision, configuré pour juger si une valeur réelle du rapport de charge rapide de la batterie atteint ou dépasse une valeur cible prédéfinie du rapport de charge rapide, si le résultat du jugement est oui, effectuer un réapprovisionnement en énergie sur la batterie dans un mode de charge lente, ou si ce n'est pas le cas, effectuer le réapprovisionnement en énergie sur la batterie dans un mode de charge rapide.

11. Système selon la revendication 8 ou 9 :
le degré d'utilisation de charge lente comportant un rapport de charge lente de la batterie, et le rapport de charge lente de la batterie désignant une proportion des temps de charge lente de la batterie aux temps de charge totaux à partir de l'utilisation de la batterie ou au cours d'une période prédéfinie ; et
le module d'analyse et de décision comportant un deuxième sous-module de décision, configuré pour juger si la valeur réelle du rapport de charge lente de la batterie atteint ou dépasse une valeur cible prédéfinie du rapport de charge lente, si le résultat du jugement est oui, effectuer un réapprovisionnement en énergie sur la batterie dans le mode de charge rapide, ou si ce n'est pas le cas, effectuer le réapprovisionnement en énergie sur la batterie dans le mode de charge lente.

12. Système selon la revendication 8 ou 9 :
le degré d'utilisation de charge rapide comportant les temps de charge rapide de la batterie au cours d'une période de cycles de mode de charge, et la période de cycles de mode de charge désignant une période composée de multiples opérations de charge successives de la batterie ; et
le module d'analyse et de décision comportant un troisième sous-module de décision, configuré pour juger si la valeur réelle des temps de charge rapide de la batterie au cours de la période récente de cycles de mode de charge atteint ou dépasse une valeur cible prédéfinie des temps de charge rapide, si le résultat du jugement est oui, effectuer un réapprovisionnement en énergie sur la batterie dans le mode de charge lente, ou si ce n'est pas le cas, effectuer le réapprovisionnement en énergie sur la batterie dans le mode de charge rapide.

13. Système selon la revendication 8 ou 9 :
le degré d'utilisation de charge lente comportant les temps de charge lente de la batterie au cours d'une période de cycles de mode de charge, et la période de cycles de mode de charge désignant une période composée de multiples opérations de charge successives de la batterie ; et
le module d'analyse et de décision comportant un quatrième sous-module de décision, configuré pour juger si la valeur réelle des temps de charge lente de la batterie au cours de la période récente de cycles de mode de charge atteint ou dépasse une valeur cible prédéfinie des temps de charge lente, si le résultat du jugement est oui, effectuer un réapprovisionnement en énergie sur la batterie dans le mode de charge rapide, ou si ce n'est pas le cas, effectuer le réapprovisionnement en énergie sur la batterie dans le mode de charge lente.

14. Moyen de commande, comportant une mémoire et un processeur, la mémoire conservant un programme informatique, et le programme pouvant mettre en œuvre les étapes du procédé d'équilibrage de batteries selon l'une quelconque des revendications 1 à 7 lorsqu'il est exécuté par le processeur.

15. Support de stockage lisible par ordinateur, destiné à conserver des instructions informatiques, les instructions mettant en œuvre les étapes du procédé d'équilibrage de batteries selon l'une quelconque des revendications 1 à 7 lorsqu'elles sont exécutées par un ordinateur ou un processeur.
